Europäisches Patentamt

European Patent Office

Office européen des brevets

(11) Publication number: **0 119 371**
**B1**

## (12) EUROPEAN PATENT SPECIFICATION

(45) Date of publication of patent specification: **31.05.89**

(51) Int. Cl.⁴: **A 61 C 13/26**

(21) Application number: **83830265.1**

(22) Date of filing: **13.12.83**

(54) Plastic matrix for casting divided bridge-prosthodontics.

(30) Priority: **15.12.82 IT 8282282**

(43) Date of publication of application:
**26.09.84 Bulletin 84/39**

(45) Publication of the grant of the patent:
**31.05.89 Bulletin 89/22**

(84) Designated Contracting States:
**AT BE CH DE FR GB LI LU NL SE**

(56) References cited:
**DE-A-2 443 584**
**DE-C- 339 419**
**FR-A-1 415 656**
**US-A-1 407 557**
**US-A-1 577 753**
**US-A-3 344 842**
**US-A-4 176 706**

**The file contains technical information
submitted after the application was filed and
not included in this specification**

(73) Proprietor: **Stengel, Engelberto, Dr.
Via Tiziano Vecellio 11
I-34100 Trieste (IT)**

(72) Inventor: **Stengel, Engelberto, Dr.
Via Tiziano Vecellio 11
I-34100 Trieste (IT)**

(74) Representative: **Zorzut, Ermenegildo
Studio Tecnico S.A.I. per. ind. ZORZUT
ERMENEGILDO Via Imbriani 2
I-34122 Trieste (IT)**

Courier Press, Leamington Spa, England.

## Description

A method for producing a sectioned fixed bridge prosthesis (21', 22', 23', 24') consisting of a first part (23A', 24') and a second part (21', 22', 23B') comprising respective first and second crowns (21', 24') for mounting over respective abutment pillars (11, 12) and connected together by an intradental mortice-tenon (32', 80') connection formed in a suspended tooth, the method involving the use of a thermoplastic pattern (30) comprising a lamina (31) with a plane rear face and with a cuneiform, dovetail section protrusion (32) on the front face thereof, said lamina and said protrusion being of such a size and length respectively as to overlap the section (28) of the suspended tooth at the connection, the method comprising the steps of:

a) forming a one-piece wax model (21, 22, 23, 24) of the prosthesis;

b) forming respective first and second parts (23A, 24, 21, 22, 23B) and corresponding joint faces (28, 29) of said wax model by cutting a plane section through the suspended tooth member thereof, said plane section being parallel to the longitudinal axis (18) of the corresponding second abutment pillar (12) and perpendicular to the vertical plane passing through the dental crest;

c) selecting that part of the pattern within which the size of the protrusion is that required for the connection to be produced;

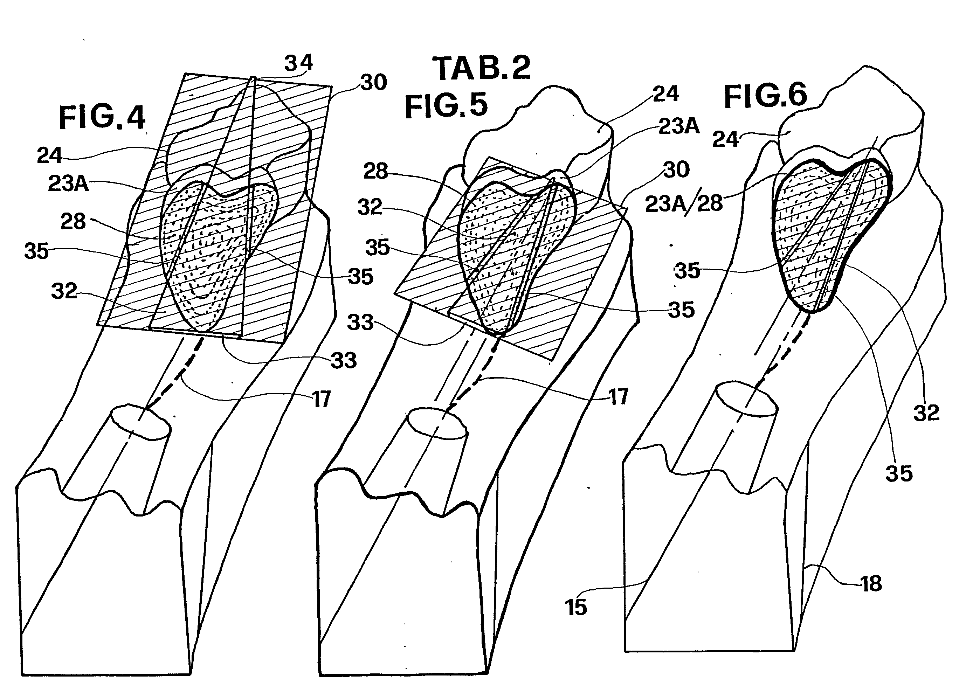

d) attaching the plane rear face of the pattern to the connection face (28) of the first half of the wax model to form a composite wax-thermoplastic model such that the selected part is located over the joint face and such that the cuneiform protrusion is parallel to the longitudinal axis (18) of the corresponding second abutment pillar (figure 5);

e) removing excess material to shape the pattern to match the outline of the connection face (figure 6) and subsequently forming with the composite wax-thermoplastic model the prosthesis first part in metal by investment casting;

f) using the cuneiform section of the metal first part to create a corresponding female form (80') in the connection face of the second part of the wax model;

g) forming the prosthesis second part in metal by investment casting.

A fixed sectioned bridge has to be considered in the case where the supporting teeth are not parallel, for which reason a bridge constructed in one piece cannot be applied and then to give to the patient the possibility of avoiding a loose dental prosthesis that is not always well accepted. If in these cases construction of a fixed dental bridge in one piece is tried, considerable problems will be met:

1—the attempt to make parallel the stumps carries with it an unacceptable risk in dentistry and the danger of a pulp lesion.

2—Making the stumps parallel has the result of an exaggerated conicity in the supporting teeth and inevitably a decementation of the retainers with consequent destruction of the supporting teeth because of dental decay.

To avoid these dangers it is common to construct fixed section dental bridges the separate parts of which each have incorporated half of a joint. These parts of the joint, called male and female, are caused to interlock the two parts after they have been cemented separately.

Being that this way of constructing a fixed sectioned dental bridge, besides being very expensive, requires a deep groove into the natural live tooth, so as to be able to insert the female of the joint into it and considering that the female is nothing more than a small metal block in the shape of a parallelepiped, in which has been made a mortice, it would be better to completely give up a prefabricated female and instead to make the mortice directly in the same inlay. A method, which implements this idea, is published in the document U.S.—A—3,344,842 d.d. 3 October 1967.

In this method a prismatic tab of thermoplastic material is used to make a dove-tail mortice in the wax pattern of the first part of the bridge, which is an inlay. After casting, the inlay in metal is adapted on the plaster working model so as to be able to mould in wax the pattern of the second part of the bridge, by inserting in the mortice of the inlay a piece of the same plastic bar, in order to interlock it with the wax pattern, to obtain from the casting in metal, a tenon with a dove-tail section.

After the second casting the two parts of the bridge have a precise mortice-tenon junction.

This method has many advantages compared to those methods, which employ prefabricated attachments, whether in metal or in plastic, nevertheless these still remain some difficulties.

The first problem in that it is necessary to fix the axis of insertion on the survey instrument and the form of the preparations of the inlays. This obliges you to take two impressions with a period of time in between, because the second impression can only be taken after the laboratory has made the analysis using the first model.

The second difficulty is that in a greatly inclined tooth it is not possible to prepare an inlay for an interproximal interlock without having first levelled the wall sloping towards the gap, however by doing this you endanger the life of the abutment tooth. To avoid this danger you come to a compromise, by inserting the interlock not in the inside of the tooth but instead into a protuberance added to the outside of the tooth, but by doing this you deform the natural look of the prosthesis.

The third difficulty is that the mouth of the mortice is situated on the occlusal surface of the prosthesis, obstructing a natural and functional waxing of the cusps and of the grooves. The biggest problem however is the fact that an interproximal interlock has to be situated in a place where it occupies the vital space of the marginal gum. When this happens in a removable denture the problem is not as serious because the patient can take out the prosthesis for cleaning and during the night can let the compressed gum rest. In a fixed dental bridge, not sectioned, the interlock between the abutment and the suspended artificial tooth is made by means of soldering and the area which is necessary for this takes up only a few square millimetres. In this case the dentist takes the greatest care to keep the interproximal space free which is situated between the soldering point and the gum. An interproximal interlock however small it might be, requires so much space that the dentist, sometimes does a surgical operation and takes away a portion of the gum so as to be able to apply a joint. Document DE—A—2 443 584 discloses the formation of a wedge shaped trapezoidal section mortice-tenon joint for connecting two parts of a dental prosthesis, involving the use of a thermoplastic pattern to produce the tenon in metal by investment casting and subsequently using the metal tenon as an insert while forming a pattern for that part of the prosthesis to contain the mortice. The thermoplastic pattern produced in the method disclosed in this prior art document is identical in size to the metal tenon used in forming the pattern for the mortice and there is no possibility to use a single size of thermoplastic pattern to produce varying sizes of joints. The method is particularly intended for producing joints in removable prostheses.

This invention resolves the problem by using an auxiliary member of plastic material to form a mortice-tenon joint between the two halves of an artificial tooth, modelled in wax, which is part of a wax pattern of a fixed dental bridge divided in two parts.

In this way the mortice-tenon joint of the two divided parts of the dental bridge, obtained by the investment casting process, is situated far from the interproximal space, thereby avoiding all the disadvantages that come from placing joint in that space. The advantages obtained thanks to the invention come mainly from the fact that you are able to make the division of a fixed sectioned bridge of dental prosthesis in the middle of the suspended body of the bridge, instead of in the contact area between the suspended body of the bridge and its own supporting tooth (abutment). By using this method we surprisingly manage to avoid the lesion of the paradontal tissues, to avoid any obstacle to a natural and aesthetical conformation of the prosthesis, to avoid any obstacle to an anatomical and functional waxing of the cusp grooves, and to permit the formation of a very long mortice and of a very strong joint thanks to a very wide joining area, and to make easier the insertion of the mortice on the tenon, by cementing the prosthesis in the mouth, thanks to a deliberate conicity of the joint.

The method of constructing a sectioned dental bridge by means of the suspended artificial tooth (pontic), like is being considered in the present application, differs considerably from the sectioned dental bridge using the interproximal space.

First of all it is not necessary to mount a study model on the survey instrument to find the best angle of insertion and to indicate the manner in which the supporting teeth must be prepared.

See document U.S.A. 344 872 page 1 line 22.

In the present method, the angle of insertion is always that of the crown of the second abutment. It is not necessary to prepare an inlay in the first abutment tooth because the groove is not made in the abutment but in the suspended artificial tooth. The wax pattern of the dental bridge is not carved in loose pieces but is made in one piece after the working cast has been mounted on an articulator. This process enables an anatomically perfect moulding and a proper waxing (in other words a physiological development of occlusal morphology).

The second of wax pattern is made after having completed the moulding and after having fixed the morphology of the pattern and its position on the working cast with the help of a silicone dam. This gives the possibility of relocating at any time, the second half of the wax pattern on the working model, in the exact position that it was in, before making the dividing cut and to connect it to the first part of the bridge, cast in metal, by means of a simple instillation of casting wax, without having to repeat the waxing up of the occlusal morphology that has been destroyed by cutting the entire wax pattern.

The working model with the wax pattern of the first part of the bridge is now mounted in a survey instrument to provide a surface section perfectly parallel to the insertion axis of the second abutment.

On this surface is put an auxiliary element of thermoplastic material, characterised by what it claims to be, and orientated conveniently in such a way that the big end of the cuneiform tenon is described towards the alveolar crest and with the tenon to the axis of the second supporting tooth of the bridge.

After having fixed the element in the right position with the sticky wax, you cut the auxiliary element along the contour of the area of section of the wax pattern. The casting pattern of the first half of the bridge is in this way provided with a contact area, the dimensions of which and contour are equal to those of the artificial suspended tooth, from which protrudes a cuneiform tenon with a dove-tail section along the whole sectional surface and parallel to the axis of insertion of the second half of the sectioned bridge, ready to be cast in metal in the investment casting process.

The piece casted in metal, well-finished and polished, is now remounted on the working model together with the wax pattern of the second half of the prosthesis and fixed in the right position.

The casting pattern of the second half of the prosthesis containing the mortice, which will. be used to produce in the investment casting process the second half of the fixed sectioned bridge dental prosthesis is formed by impression of the tenon.

The invention in question can be better understood by following the description of the attached drawing which show a schematic example of the invention itself.

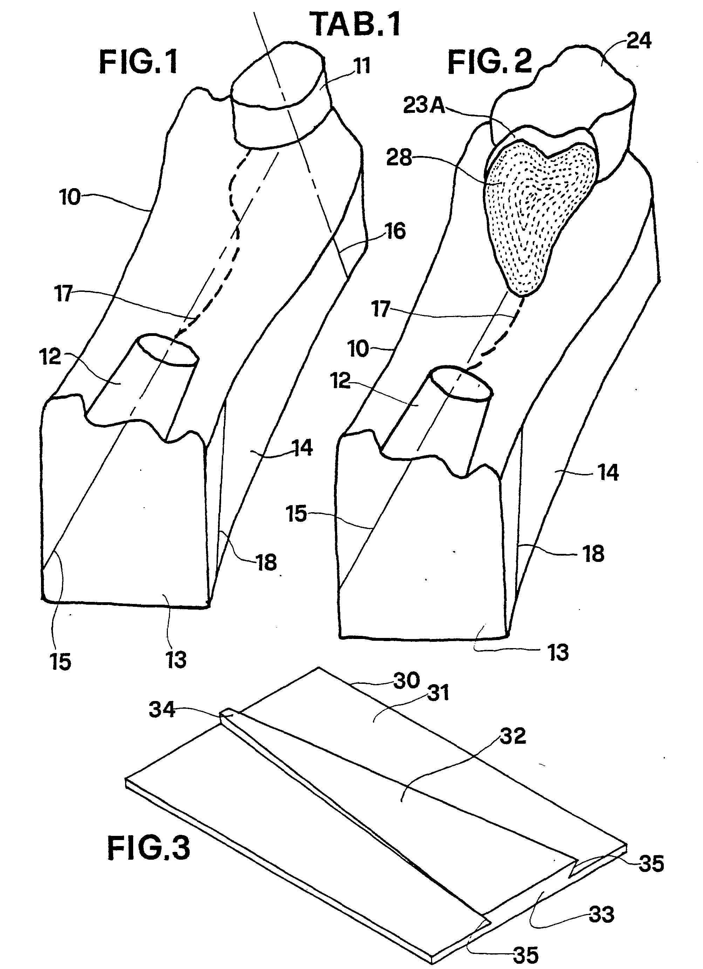

Table 1: Fig. 1 is a rough sketch in perspective of the plaser model, also called the working cast, of a portion of the jaw and gum (numbered 10 on the illustration) and includes a pair of spaced live teeth 11—12 prepared to receive the abutments of a fixed bridge dental prosthesis. On the front and lateral faces 13—14 of the plaster socket 10 reference lines 15 and 16 are drawn with a pencil to indicate the angle of insertion of the abutments 11—12 and in the gap between them the edentulous alveolar crest 17.

Fig. 2 shows the working model illustrated in Fig. 1, after the wax pattern of the fixed dental bridge has been moulded, and on which dental bridge is now found only the wax pattern of the first part of the bridge 21+22 made up of the abutment crown 21, to which is interlocked the half of the suspended artificial tooth 22, while the wax pattern of the second part of the bridge has been removed from the working cast 10 and respectively from the abutment tooth 12. The heart-shaped design 23 is the surface of section of the bridge through the wax pattern of pontic 22.

Fig. 3 shows the axonometric view of the thermoplastic member in question 30, from which the conicity of the protruding tab and the dovetail section of the tab itself can clearly be seen.

The determining characteristic of this member is however the large dimension of the contact surface 31 compared to the base of the wedge 32 that in the vertex ends with an acute angle.

Table 2: Fig. 4 shows the first attempt to make a joint between the two parts of the sectioned bridge. The transparent plastic element 30 is put on the heartshaped surface of section 23 of the wax pattern 21+22 so that the bottom 33 of the wedge-shaped tenon 32 touches the alveolar crest 17.

The two double lines are the retaining flanks 35 of the tenon which here are too short to guarantee a firm connection between the two parts of the bridge.

By shortening the member from the bottom you obtain a thinner wedge but with longer retaining flanks shown in Fig. 5.

Fig. 5 shows the transparent plastic element 30 shortened from the base, resting on the surface of the wax pattern 23 with the bottom of the tenon 32 touching the alveolar crest 17 and orientated parallel to the axis of insertion of the second abutment 15. The retaining flanks 35 of the tenon 32 marked by double lines, are now long enough compared to those in figure 4, to guarantee a firm connection of the two parts of the bridge even after the top of the tenon is reduced to be convered by the wax pattern of the second half of the sectioned bridge.

Fig. 6 shows the casting pattern of the first part of the sectioned bridge, ready to be used in the investment casting process for the casting in gold or other suitable metals for the dental prosthesis.

The casting pattern illustrated here consists of the wax pattern 21+22 on which has been made a contact area 31 (flat, straight and smooth) in thermoplastic material and a cuneiform tenon 32 which has got retaining flanks 35.

The thermoplastic element needs to have a surface 31 wide enough so that it can be cut along the contour (heart-shaped) 23 after it has been orientated with the tenon 37 parallel to the axis of insertion 15.

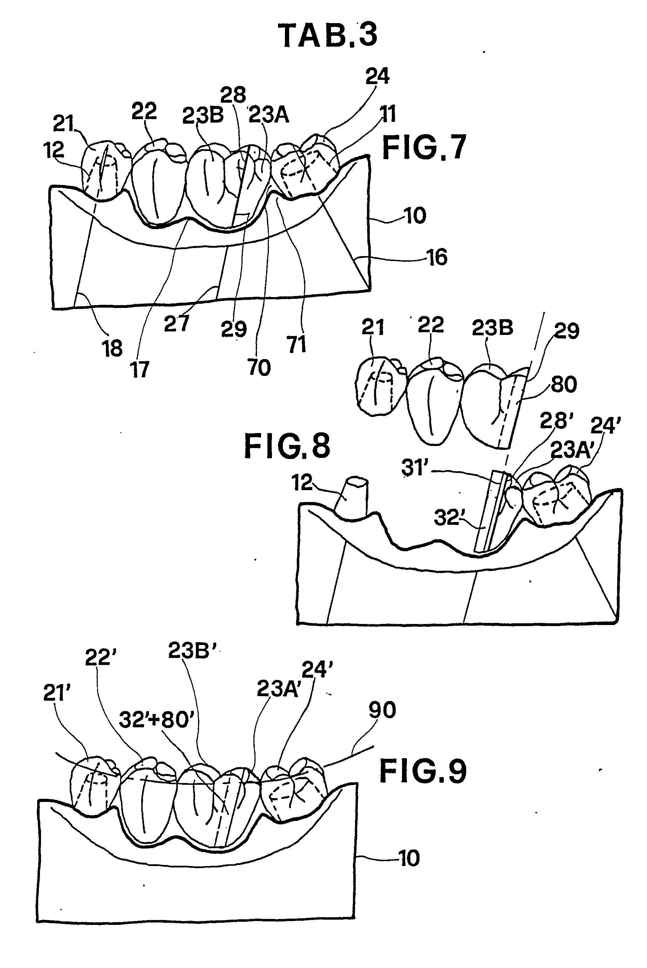

Table 3: Fig. 7 is a lateral, schematic view of the wax pattern of a fixed partial denture made up of the elements 21+22+23+24, formed on the working model 10 having disparallel abutment teeth 11 and 12. The plane of section 27 is parallel to the insertion axis 18 of the retainer 21 on the abutment 12, perpendicular to the vertical plane passing through the dental crest and forms heart-shaped partition surfaces in the pontic 23 and more precisely: the surface 23/28 on the first part of the prosthesis, which is the distal one 24+23a and the surface 23/29 on the mesial part made up of the elements 21+22+23b.

The interproximal space 70 is free for an undisturbed extension of the cervical gum 71 of the patient.

Fig. 8 is the schematic view blown up of the first half of the prothesis finished in metal 24'+23' with the tenon 32' protruding from the contact surface 31' and the wax pattern of the second half of the prosthesis 21+22+23 containing the mortice.

Note: The numbers marked with an apostrophe refer to parts being cast in metal.

Fig. 9 shows the prosthesis finished in metal, remounted on the working cast 10. An imaginary line 90 indicates the occluding surfaces of the teeth, particularly of the pontic 23'.

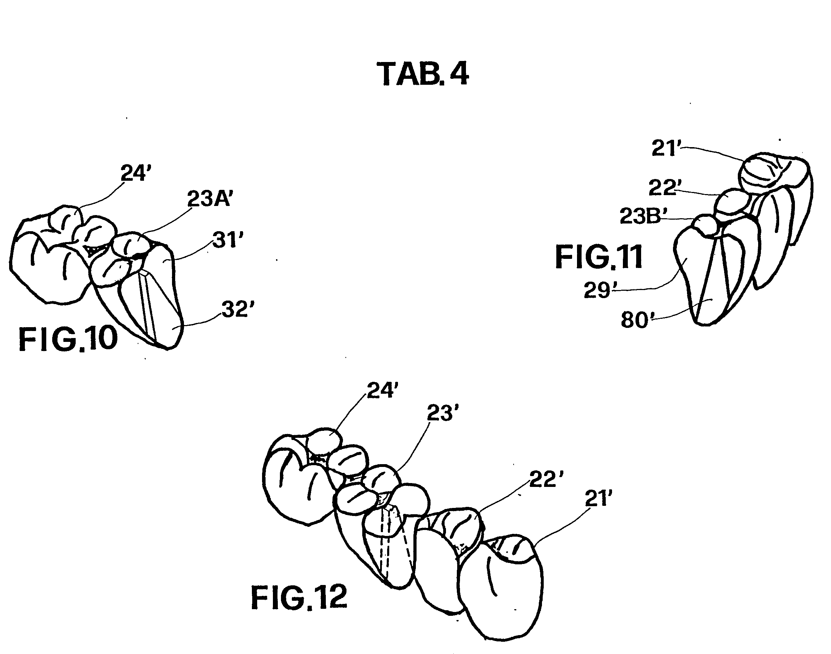

Table 4: The figure 10 shows the first part of the prosthesis finished in metal, including the retainer 24' to which is interlocked a homogeneous half of the sectioned pontic 23'a to which partitions surface 28' is interlocked a homogeneous tenon having a dovetail section 32'.

The figure 11 shows the second half of the divided prothesis, which includes the retainer 21', the suspended element 22' and the half of the sectioned suspended element 23'b, in which partition surface 29' is situated a mortice 80' corresponding to the tenon 32'.

The figure 12 shows the fixed partial denture prothesis made from the two divided parts, illustrated in the figures 10 and 11.

## Claim

A method for producing a sectioned fixed bridge protheses (21', 22', 23', 24') consisting of a first part (23A', 24') and a second part (21', 22', 23B') comprising respective first and second crowns (21', 24') for mounting over respective abutment pillars (11, 12) and connected together by an intradental mortice-tenon (32', 80') connection formed in a suspended tooth, the method involving the use of a thermoplastic pattern (30) comprising a lamina (31) with a plane rear face and with a cuneiform, dovetail section protrusion (32) on the front face thereof, said lamina and said protrusion being of such a size and length respectively as to overlap the section (28) of the suspended tooth at the connection, the method comprising the steps of:

a) forming a one-piece wax model (21, 22, 23, 24) of the prosthesis;

b) forming respective first and second parts (23A, 24, 21, 22, 23B) and corresponding joint faces (28, 29) of said wax model by cutting a plane section through the suspended tooth member thereof, said plane section being parallel to the longitudinal axis (18) of the corresponding second abutment pillar (12) and perpendicular to the vertical plane passing through the dental crest;

c) selecting that part of the pattern within which the size of the protrusion is that required for the connection to be produced;

d) attaching the plane rear face of the pattern to the connection face (28) of the first half of the wax model to form a composite wax-thermoplastic model such that the selected part is located over the joint face and such that the cuneiform protrusion is parallel to the longitudinal axis (18) of the corresponding second abutment pillar (figure 5);

e) removing excess material to shape the pattern to match the outline of the connection face (figure 6) and subsequently forming with the composite wax-thermoplastic model the prosthesis first part in metal by investment casting;

f) using the cuneiform section of the metal first part to create a corresponding female form (80') in the connection face of the second part of the wax model;

g) forming the prosthesis second part in metal by investment casting.

**Patentanspruch**

Eine Methode zur Herstellung einer segmentierten festsitzenden Brücke (21', 22', 23', 24'), bestehend aus einem ersten Tell (23A', 24') und einem zweiten Teil (21', 22', 23B'), mit respektive einer ersten und einer zweiten Krone (21', 24') zum Aufsetzen auf die jeweiligen Brückenpfeiler (11, 12) und miteinander verbunded durch eine in einem suspendierten Zahn gebildete intradentale Patrizien- und Matrizen-Verbindung (32', 80'); die Methode verwendet ein thermoplastisches Profil (30) mit einer Platte (31), deren Hinterseite flach ist, während due Vorderseite einen keilförmigen Schwalbenschwanzvorsprung aufweist, besagte Platte mit besagtem Vorsprung sind jeweils so geformt und so lang, daß sie dis Schnittfläche (28) des suspendierten Zahns an der Verbindungsstelle überlappen. Die einzelnen Phasen dieser Methoden sind:

a) Herstellen eines Wachsmodells in einem Stück (21, 22, 23, 24) des Zahnersatzes;

b) Herstellen des respektive ersten und zweiten Teils (23A, 24, 21, 22, 23B) des Wachsmodells mit den entsprechenden Verbindungsflächen (28, 29), durch einen geraden Durchschnitt durch das suspendierte Zahnteil desselben, wobei besagter gerader Durchschnitt parallel zur Längsachse (18) des entsprechenden zweiten Brückenpfeilers (12) verläuft und rechtwinkling zur vertikalen Ebene durch den Zahnkamm steht;

c) Wahl desjenigen Teils des Profils, in dem die Größe des Vorsprungs der jenigen Größe entspricht, die für die herzustellende Verbindung erforderlich ist;

d) Anbringung der hinteren geraden Profilfläche auf die Verbindungsfläche (28) der ersten Hälfte des Wachsmodells zur Bildung eines kompositen Wachs-Thermoplastikmodells, so daß der betreffende Teil über der Verbindungsfläche zu liegen kommt und der keilförmige Vorsprung parallel zur Längsachse (18) des entsprechenden zweiten Brückenpfeilers liegt (Abb. 5);

e) Entfernen von überschüssigem Material, um dem Profil die genaue Paßform für die Verbindungsfläche zu geben (Abb. 6), darauf Ausbildung—mittels des kompositen Wachs-Thermoplastikmodells—des ersten Zahnersatzteils aus Metall durch Wachsausschmelzverfahren;

f) unter Verwendung des keilförmigen Segments des ersten Metallteils Bildung der entsprechenden Matrize (80') an der Verbindungsfläche des zweiten Teils des Wachsmodells;

g) Ausbildung des zweiten Teils des Zahnersatzes aus Metall durch Wachsausschmelzverfahren.

**Revendication**

Une méthode qui permet d'obtenir une prothèse bridge fixe sectionnée (21', 22', 23', 24') se composant d'une première partie (23A', 24') et d'une deuxième partie (21', 22', 23B') comprenant respectivement la première et la deuxième couronne (21', 24') pour le montage sur les respectifs piliers de support (11, 12) et reliées ensemble par une jonction intradentaire mortaise-tenon (32', 80') formée dans une dent suspendue.

La méthode implique l'utilisation d'un élément thermoplastique (30) comprenant une lame (31) avec une face postérieure plane et avec une proéminence à section cunéiforme, à queue d'aronde (32) sur sa face antérieure. Cette lame et cette proéminence ont une dimension et un longueur qui dépassent la section (28) de la dent suspendue, au point de jonction. La méthode comprend les étapes suivantes:

a) former un modèle d'une seule pièce en cire (21, 22, 23, 24) de la prothèse;

b) former respectivement la première et la deuxième partie (23A, 24, 21, 22, 23B) et les faces de jonction correspondantes (28, 29) de ce modèle en cire en coupant une section plane à travers la dent suspendue. Cette section plane est parallèle à l'axe longitudinal (18) du deuxième pilier correspondant (12) et perpendiculaire au plan vertical passant à travers la crête dentaire;

c) choisir la partie de l'élément à l'intérieur de laquelle la dimension de la proéminence correspond à la dimension voulue pour la jonction;

d) fixer la face postérieure plane de l'élément à la face de jonction (28) de la première moitié du modèle en cire de manière à former un modèle composé cire-thermoplastique de façon à ce que la partie choisie se trouve sur la face de jonction et de manière à ce que la proéminence cunéiforme soit parallèle à l'axe longitudinal (18) du deuxième pilier correspondant (fig. 5);

e) enlever le matériel en excès pour modeler l'élément jusqu'à joindre le profil de la face de jonction (fig. 6) et former ensuite, avec le modèle composé cire-thermoplastique la première partie en métal de la prothèse par microfusion;

f) utiliser la section cunéiforme de la première partie en métal pour créer une forme femelle correspondante (80') dans la face de jonction de la deuxième partie du modèle en cire;

g) former la deuxième partie en métal de la prothèse par microfusion.

EP 0 119 371 B1

TAB.1

FIG.1

FIG.2

FIG.3

FIG.4

TAB.2
FIG.5

FIG.6

34
30
24
23A
28
35
32
33
17

28
32
35
35
33
17

24
23A
30
23A/28
35
35

35
32
35
15
18

EP 0 119 371 B1

## TAB.3

**FIG.7**

**FIG.8**

**FIG.9**

# TAB. 4

**FIG.10**
24'
23A'
31'
32'

**FIG.11**
21'
22'
23B'
29'
80'

**FIG.12**
24'
23'
22'
21'

EP 0 119 371 B1